# EUROPEAN PATENT SPECIFICATION

(11) **EP 1 728 652 B1**
(45) Date of publication and mention of the grant of the patent: **10.10.2007**
(21) Application number: 06114642.9
(22) Date of filing: 29.05.2006
(51) Int. Cl.: B60D 5/00

(54) **Gangway bellows cover**
Faltenbalg für eine Übergangsbrücke
Soufflet de passerelle

(30) Priority: 31.05.2005 IT BO20050031 U
(43) Date of publication of application: 06.12.2006
(73) Proprietor: P.E.I. Protezioni Elaborazioni Industriali S.r.l., 40012 Calderara di Reno (Bologna) (IT)
(72) Inventor: Mardegan, Vittorio, 26037, S. Giovanni in Croce (Cremona) (IT)
(74) Representative: Lanzoni, Luciano

(56) References cited:
- EP-A- 0 631 890
- EP-A- 0 698 514
- DE-A- 3 225 031
- FR-A- 2 550 697
- US-A- 4 035 095

## Description

The present invention relates to a gangway bellows cover.

In particular, the present invention relates to a connecting element for profiles, normally metal, used to stiffen the accordion gangway bellows covers between two articulated parts of a vehicle.

In jointed or articulated vehicles, such as urban buses, the connection between the two cars of which the bus consists is made by rotary platforms which allow passengers both to safely pass through and stand in the connecting zone even when the vehicle goes round a bend and therefore the two cars are out of alignment.

The sides and top of the connecting zone are protected by an accordion gangway bellows cover which basically forms a tunnel designed to change according to the relative movements between the cars.

In articulated vehicles, the front car which is the tractor, normally also comprises the parts for generating and/or distributing electricity and compressed air which, if the vehicle is to function correctly, must also be fed to the rear trailer car.

Therefore, said tunnel not only allows passengers to pass through from one car to the other, but also allows the passage of power cables and pipes between the two cars.

In order to both protect said cables and pipes and make effective use of the space on the bus, it was advantageous to make special service tunnels in the main tunnel.

The main tunnel consists of a gangway bellows cover with quadrangular cross-section which, with the cars aligned, even provides substantial external continuity between them.

When the vehicle is on a bend and the two cars turn relative to one another, the portion of gangway bellows cover on the inside of the bend tends to be compacted, whilst the portion on the outside is extended.

The gangway bellows cover normally consists of a plurality of bands made of flexible material, usually a plastic-coated fabric, joined together longitudinally by stitching or even gluing or vulcanisation.

The stitching, usually reinforced by placing a special flexible edge over it, may alternately face the inside and the outside of the gangway bellows cover or, in gangway bellows covers with a simplified structure even just inside or outside.

To guarantee greater stiffness for the gangway bellows cover assembly, at least some sections of said stitching have stiffening profiles applied to them, normally made of aluminium.

For example, stiffening profiles are mounted on the gangway bellows cover side inside stitching, with the main function of helping to support the service tunnels.

In detail, at the upper ends of said profiles, which are substantially straight, further profiles are anchored, being at least partly curved, which, together with the respective gangway bellows cover, contribute to the formation of the service tunnel.

In particular, for anchoring such profiles the use is known of connecting elements made of a plastic material with two holes for the passage of two screws to be inserted respectively in one and in the other profile to be anchored.

Fitting such connecting elements involves many disadvantages, a first being the need to make respective housing and engagement holes for the screws. Said holes must also be made longitudinally in the profiles where the material is quite thin and as a result there is a good chance that the profile may be damaged.

Therefore, it is evident that, due to the usually high number of holes to be made in a gangway bellows cover and the difficulty of making them, the use of connecting elements of the known type is problematic and is not economical.

Moreover, even tightening of the screws, involving an element usually made of plastic, requires particular care to avoid the evident risk of breaking the element.

A gangway bellows cover according to the preamble of claim 1 is known from EP698514A.

The aim of the present invention is to produce a gangway bellows cover able to overcome the above-mentioned disadvantages with reference to the prior art and which is, at the same time, economical to make and easy and practical to use.

Accordingly, said aim is achieved by a gangway bellows cover with the features described in claim 1.

The technical characteristics of the invention, with reference to the above aims, are clearly described in the claims below and its advantages are more apparent from the detailed description which follows, with reference to the accompanying drawings which illustrate a preferred, non-limiting embodiment, and in which:
- Figure 1 is a perspective view from above, with some parts cut away for clarity, of a gangway bellows cover for connecting two articulated parts of a vehicle;
- Figure 2 is a schematic perspective view of two disassembled details of the cover illustrated in Figure 1;
- Figure 3 is an exploded perspective view, with some parts in cross-section, of a detail of the cover illustrated in Figure 1;
- Figures 4 and 5 are perspective views from different angles of the connecting element in accordance with the present invention in a disassembled configuration;
- Figure 6 is a perspective view of the connecting element in accordance with the present invention in an assembled configuration.

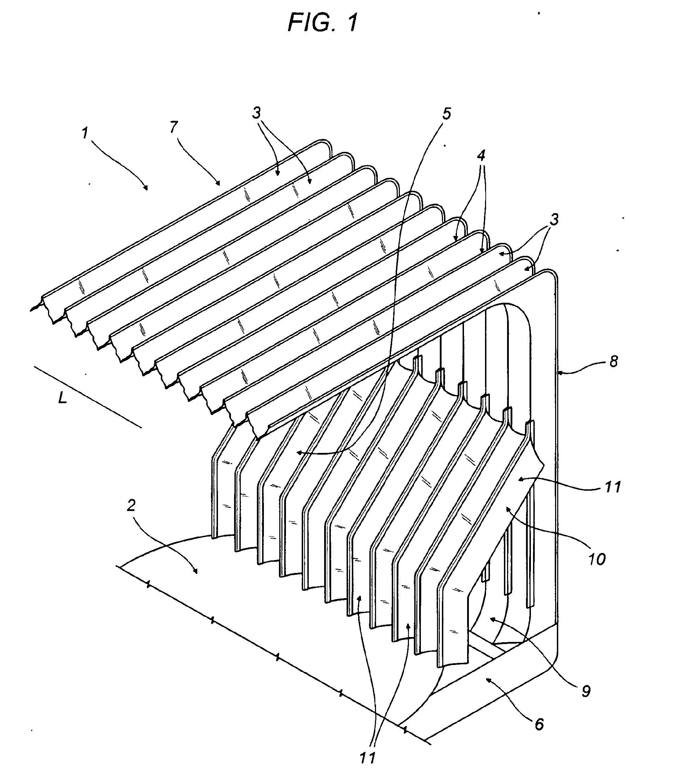

With reference to Figure 1 the numeral 1 denotes as a whole a gangway bellows cover of the type normally used for connecting two cars, not illustrated, which constitute an articulated vehicle, for example an urban bus.

The cover 1 is usually located at a rotary platform 2 on which vehicle users can stand or which they can use to pass from one car to another, not illustrated.

Gangway bellows covers of the type illustrated in Figure 1 are basically known as regards their general characteristics relative both to structure and operation and, therefore, are described in the following text only with reference to those component parts necessary to understand the subject matter of the present invention.

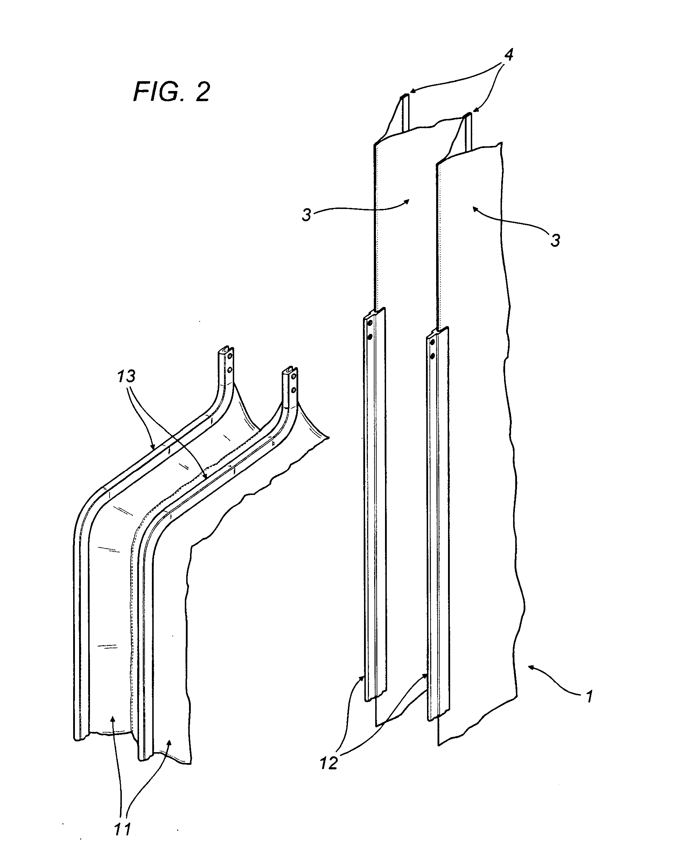

As illustrated in Figures 1 and 2, the gangway bellows cover 1 comprises a plurality of bands 3 of plastic-coated fabric stitched together side by side according to a side by side positioning line L.

A plurality of rigid frames 4, advantageously made of aluminium or plastic, are used for the dual purpose of protecting the stitching and stiffening the cover 1.

The gangway bellows cover 1, together with the platform 2, forms a main tunnel 5 which, as already indicated, can be used by the vehicle passengers.

The rotary platform 2 forms a tunnel 5 base 6 whilst the cover 1 forms a horizontal upper wall 7 and two vertical side walls, only one of which, labelled 8, is illustrated in Figure 1.

Inside the main tunnel 5 there is a secondary tunnel 9 for the passage of power cables and pipes between the two cars.

The secondary tunnel 9 illustrated in Figure 1 has a roughly trapezoidal cross-section relative to a plane, not illustrated, perpendicular to the line L.

The secondary tunnel 9 is separated from the main tunnel 5 by a sloping wall 10, also having a bellows structure and obtained, similarly to the cover 1, using respective bands 11 of fabric which are stitched together.

As illustrated in Figure 2 which respectively shows portions of the vertical side wall 8 and the sloping wall 10, bar-shaped stiffening profiles 12, 13 are fixed to them.

In particular, substantially straight profiles 12 are fixed along the stitching of the vertical wall 8, whilst curved profiles 13 are fixed along the stitching of the sloping wall 10.

Obviously, the curvature of the profile 13 depends on the required shape of the secondary tunnel 9 and, therefore, the curvature illustrated in the accompanying drawings is only a non-limiting example.

For greater clarity, the profiles 12 and 13 are illustrated in a disassembled configuration in Figure 2.

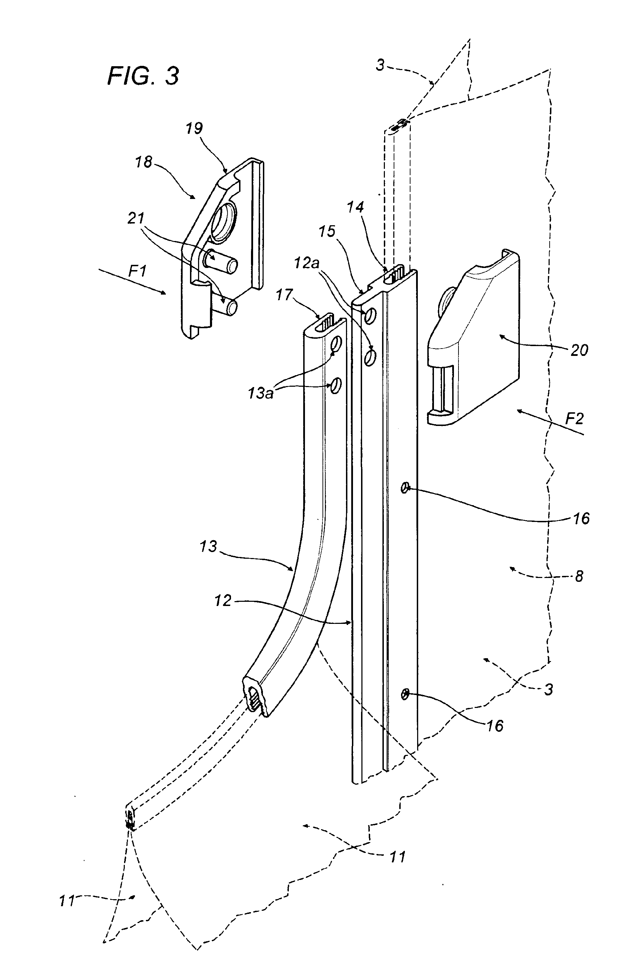

Figure 3 shows details of two portions of the stiffening profiles 12, 13 with bands 3, 11 of fabric, indicated with dashed lines, connected to them.

The straight profile 12, of the known type, has a differentiated cross-section, consisting of a first U-shaped cross-section 14, designed to engage with stitching on the vertical wall 8, and a second, substantially rectangular cross-section 15. Known elements, such as rivets 16, are inserted along the length of the straight profile 12 to guarantee that the profile 12 is correctly fixed to the bands 3.

The curved profile 13 has a U-shaped cross-section 17, designed to fit over and engage with the part of the straight profile 12 which has a rectangular cross-section 15.

In other words, the U-shaped cross-section 17 of the curved profile 13 and the rectangular cross-section 15 of the straight profile 12 are shaped to match one another so that they can fit together.

Through holes 12a, 13a are made respectively in the straight profile 12 and the curved profile 13, so that when the sections 15 and 17 are fitted together, the holes 12a, 13a are coaxial.

Advantageously, to facilitate production, the holes 12a, 13a are made with a single drilling operation carried out after the two profiles 12, 13 have been put together in what should be their final assembled configuration.

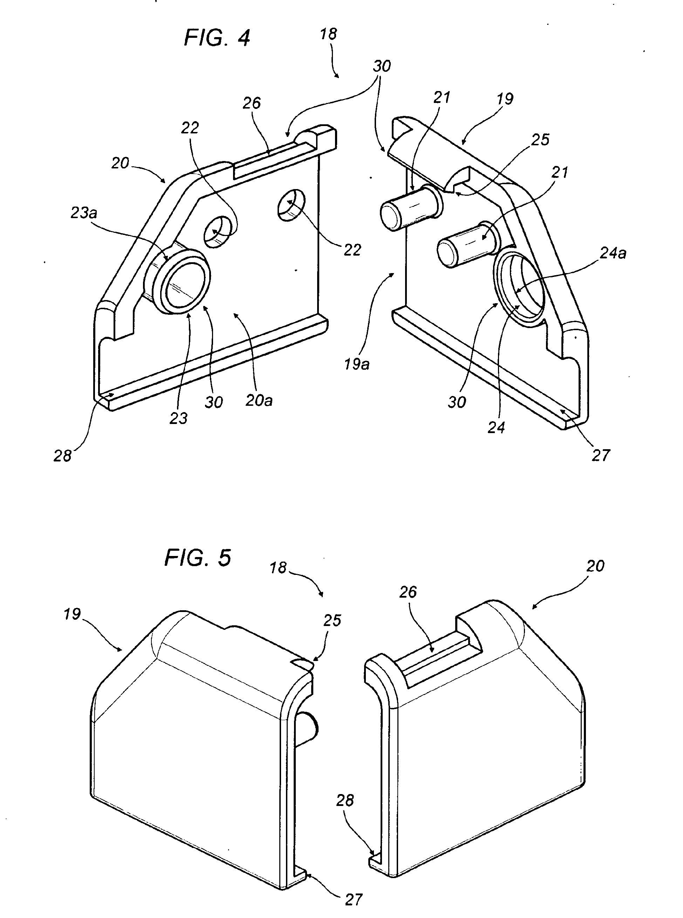

Figures 4 and 5 show a connecting element 18 for the profiles 12, 13, made in accordance with the present invention.

The connecting element 18 comprises two portions 19, 20, respectively a first and a second, designed to be assembled.

The first portion 19 has an inner face 19a from which two substantially cylindrical pegs 21 project.

The second portion 20 has an inner face 20a in which two blind holes 22 are made, for housing the respective ends of the pegs 21.

On the inner face 20a of the second portion 20 there is a cylindrical projecting button 23, designed to snap into and engage with a cylindrical cavity 24 made in the inner face 19a of the first portion 19.

In detail, both on the outer surface of the button 23 and on the inner surface of the cavity 24, there are respective ridges 23a, 24a designed to allow snap fitting between the button 23 and the cavity 24.

With reference to Figures 4 and 5, a tooth 25, designed to snap onto and engage with a step 26 made on the second portion 20 of the connecting element 18, projects from the inner face 19a of the first portion 19.

The button 23 and the cavity 24, together with the tooth 25 and the step 26 form snap fitting assembly means 30 for the connecting element 18.

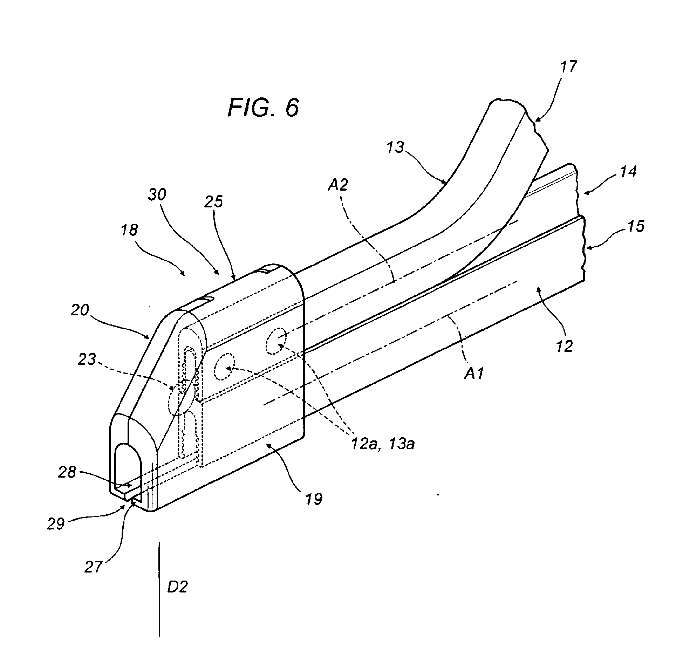

As illustrated in Figure 6, the straight profile 12 and the curved profile 13 have respective axes A1, A2 which, at the connecting element 18 assembly zone, are substantially parallel with one another and with a first predetermined direction D1.

As is also clearly illustrated in Figure 4, the first and second portions 19, 20 of the connecting element 18 respectively comprise a first and a second longitudinal edge 27, 28 extending, in the assembled element 18, parallel with the predetermined direction D1.

The longitudinal edges 27, 28 are made on the portions 19, 20 of the connecting element 20 at respective transversal ends of the portions 19, 20, where the term transversal means across the predetermined direction D1.

The first and second longitudinal edges 27, 28 form, for the connecting element 18, respective containment means for the profiles 12, 13 along a second direction D2 substantially at a right angle to the first predetermined direction D1.

Advantageously, but without limiting the scope of the invention, the connecting element 18 disclosed is made of a plastic material.

In a preferred embodiment, the connecting element 18 is made of a material comprising at least a certain percentage of polytetrafluoroethylene.

In practice, as already partly indicated, the two profiles 12 and 13 are positioned partly on top of one another in such a way that the straight profile 12 having a rectangular cross-section 15 engages with the curved profile 13 having a U-shaped cross-section. In other words, in the zone where the two profiles 12, 13 are on top of one another, the part of the profile 12 having a rectangular cross-section 15 is inserted in the curved profile 13, in a part of the latter which is straight, extending parallel with the axis A1 of the straight profile 12.

In this configuration, the through-holes 12a, 13a passing through both profiles 12 and 13 transversally to the axes A1 and A2 are made.

Starting with the configuration illustrated in Figure 3, in which the profiles 12, 13 are not on top of one another, after the profiles have been placed on top of one another the two portions 19, 20 of the connecting element 18 are drawn near in the directions of the respective arrows F1 and F2, until the pegs 21 on the first portion 19 are inserted in the coaxial holes 12a, 13a in the profiles 12, 13.

After passing through the holes 12a, 13a, the ends of the pegs 21 are positioned in the holes 22 made in the inner face 20a of the second portion 20, contributing to the correct positioning relative to one another of the portions 19, 20 of the element 18.

At this point, with the portions 12, 13 near to one another, a reciprocal pressing action is applied to the portions, substantially again according to the directions of the arrows F1, F2 in Figure 3, so that the assembly means 30 snap together.

In particular, the pressing action causes stable engagement of the tooth 25 with the step 26 and of the cylindrical button 23 with the cylindrical cavity 24, after the ridges 23a, 24a have been positioned on top of one another by snapping together.

In an alternative embodiment of the present invention not illustrated but covered by the same inventive concept, the connecting element 18 comprises, alternatively or in addition to the snap fitting assembly means 30, screw assembly means.

In other words, said alternative embodiment comprises a screw which engages both portions 19, 20 of the connecting element. Tightening the screw results in a stable condition in which the two portions 19, 20 are drawn near to one another.

The screw may, without distinction, affect areas of the connecting element 18 which engage with the stiffening profiles 19, 20 or areas which face one another directly without the profiles 19, 20 between them. In the former case there is a through-hole in the profile or profiles, allowing the passage of the above-mentioned screw.

It should be noticed how use of the connecting element disclosed allows obvious simplification of the operations for connecting the stiffening profiles of a gangway bellows cover.

It will be understood that the invention described may be useful in many industrial applications and may be modified and adapted in several ways without thereby departing from the scope of the inventive concept.

## Claims

1. A gangway bellows cover for articulated vehicles comprising two bar-shaped stiffening profiles (12, 13) which are at least partly positioned on top of one another and an element for connecting the profiles (12, 13); **characterised in that** the profiles comprise at least one through-hole (12a, 13a) passing through both profiles (12, 13) and **in that** the connecting element comprises two portions (19, 20) which are stably assembled for engaging with both profiles (12, 13), at least one of the two portions (19, 20) comprising a projecting peg (21) designed to engage in the hole (12a, 13a) passing through both profiles (12, 13).

2. The gangway bellows cover according to claim 1, **characterised in that** the two portions (19, 20) comprise snap fitting assembly means (30).

3. The gangway bellows cover according to claim 1, **characterised in that** the two portions (19, 20) comprise screw assembly means.

4. The gangway bellows cover according to claim 1, **characterised in that** the connecting element comprises two of the pegs (21) designed to engage in respective holes (12a, 13a) made in the stiffening profiles (12, 13).

5. The gangway bellows cover according to any of the claims from 2 to 4, **characterised in that** the snap fitting assembly means (30) comprise a button (23) projecting from one of the portions (19, 20) and designed to stably engage in a cavity (24) made in the other portion (19, 20).

6. The gangway bellows cover according to any of the claims from 2 to 5, **characterised in that** the snap fitting assembly means (30) comprise a tooth (25) made on one of the portions (19, 20) and designed to stably engage with a step (26) made on the other portion (19, 20).

7. The gangway bellows cover according to any of the claims from 1 to 6, **characterised in that** said rod-shaped profiles (12, 13) have, at the connecting element (18) assembly area, respective axes (A1, A2) substantially parallel with a first predetermined direction (D1), the connecting element comprising containment means (29) for the profiles (12, 13) along a second direction (D2) transversal to the first predetermined direction (D1).

8. The gangway bellows cover according to claim 7, **characterised in that** the containment means (29) comprise a first and a second longitudinal edge (27, 28) made at transversal ends of at least one of the two portions (19, 20) of the connecting element (18).

9. The gangway bellows cover according to any of the claims from 1 to 8, **characterised in that** the connecting element is made of a plastic material.

10. The gangway bellows cover according to any of the claims from 1 to 9, **characterised in that** the connecting element is made of a material comprising at least a certain percentage of polytetrafluoroethylene.

## Patentansprüche

1. Faltenbalgabdeckung für eine Übergangsbrücke an Gelenkfahrzeugen, enthaltend zwei stangenförmige Versteifungsprofile (12, 13), welche wenigstens teilweise eins über dem anderen positioniert sind, und ein Element zum Verbinden der Profile (12, 13); **dadurch gekennzeichnet, dass** die Profile wenigstens eine durchgehende Bohrung (12a, 13a) aufweisen, die durch beide Profile (12, 13) verläuft, und **dadurch**, dass das Verbindungselement zwei Abschnitte (19, 20) enthält, welche stabil zusammengesetzt sind, um in beide Profile (12, 13) zu greifen, wobei wenigstens einer der beiden Abschnitte (19, 20) einen hervorstehenden Zapfen (21) aufweist, der dazu bestimmt ist, sich in die durch beide Profile (12, 13) verlaufende Bohrung (12a, 13a) einzuschieben.

2. Faltenbalgabdeckung für eine Übergangsbrücke nach Patentanspruch 1, **dadurch gekennzeichnet, dass** die beiden Abschnitte (19, 20) Schnappverbindungsmittel (30) enthalten.

3. Faltenbalgabdeckung für eine Übergangsbrücke nach Patentanspruch 1, **dadurch gekennzeichnet, dass** die beiden Abschnitte (19, 20) Schraubverbindungsmittel enthalten.

4. Faltenbalgabdeckung für eine Übergangsbrücke nach Patentanspruch 1, **dadurch gekennzeichnet, dass** das Verbindungselement zwei der Zapfen (21) aufweist, dazu bestimmt, in die jeweiligen Bohrungen (12a, 13a) zu greifen, die in die Versteifungsprofile (12, 13) eingearbeitet sind.

5. Faltenbalgabdeckung für eine Übergangsbrücke nach einem beliebigen der Patentansprüche von 2 bis 4, **dadurch gekennzeichnet, dass** die Schnappverbindungsmittel (30) einen Knopf (23) enthalten, der von einem der Abschnitte (19, 20) hervorsteht und dazu bestimmt ist, sich stabil mit einer Vertiefung (24) zu verbinden, die in den anderen Abschnitt (19, 20) eingearbeitet ist.

6. Faltenbalgabdeckung für eine Übergangsbrücke nach einem beliebigen der Patentansprüche von 2 bis 5, **dadurch gekennzeichnet, dass** die Schnappverbindungsmittel (30) einen Zahn (25) enthalten, angearbeitet an einen der Abschnitte (19, 20) und dazu bestimmt, sich stabil mit einer Stufe (26) zu verbinden, die in den anderen Abschnitt (19, 20) eingearbeitet ist.

7. Faltenbalgabdeckung für eine Übergangsbrücke nach einem beliebigen der Patentansprüche von 1 bis 6, **dadurch gekennzeichnet, dass** die genannten stangenförmigen Profile (12, 13) in dem Montagebereich des Verbindungselementes (18) jeweilige Achsen (A1, A2) haben, im wesentlichen parallel zu einer ersten vorgegebenen Richtung (D1), wobei das Verbindungselement Aufnahmemittel (29) für die Profile (12, 13) enthält, und zwar entlang einer zweiten Richtung (D2) quer zu der ersten vorgegebenen Richtung (D1).

8. Faltenbalgabdeckung für eine Übergangsbrücke nach Patentanspruch 7, **dadurch gekennzeichnet, dass** die Aufnahmemittel (29) eine erste und eine zweite längsverlaufende Kante (27, 28) enthalten, hergestellt an den Querenden von wenigstens einem der beiden Abschnitte (19, 20) des Verbindungselementes (18).

9. Faltenbalgabdeckung für eine Übergangsbrücke nach einem beliebigen der Patentansprüche von 1 bis 8, **dadurch gekennzeichnet, dass** das Verbindungselement aus einem Kunststoff hergestellt ist.

10. Faltenbalgabdeckung für eine Übergangsbrücke nach einem beliebigen der Patentansprüche von 1 bis 9, **dadurch gekennzeichnet, dass** das Verbindungselement aus einem Material hergestellt ist, das wenigstens einen gewissen Anteil an Polytetrafluoräthylen enthält.

## Revendications

1. Un soufflet de passerelle pour véhicules articulés comprenant deux profilés de renforcement (12, 13) en forme de barres qui sont au moins partiellement positionnés l'un sur l'autre et un élément d'accouplement desdits profilés (12, 13) ; **caractérisé en ce que** les profilés présentent au moins un trou débouchant (12a, 13a) qui traverse les deux profilés (12, 13) et **en ce que** l'élément d'accouplement comprend deux parties (19, 20) qui sont assemblées de façon stable afin d'assujettir les deux profilés (12, 13), au moins une des deux parties (19, 20) comprenant un téton en saillie (21) destiné à s'introduire dans le trou (12a, 13a) traversant les deux profilés (12, 13).

2. Le soufflet de passerelle selon la revendication 1, **caractérisé en ce que** les deux parties (19, 20) comprennent des moyens d'assemblage par encliquetage (30) .

3. Le soufflet de passerelle selon la revendication 1, **caractérisé en ce que** les deux parties (19, 20) comprennent des moyens d'assemblage à vis.

4. Le soufflet de passerelle selon la revendication 1, **caractérisé en ce que** l'élément d'accouplement comprend deux desdits tétons (21) destinés à s'introduire dans des trous (12a, 13a) respectifs réalisés dans les profilés de renforcement (12, 13).

5. Le soufflet de passerelle selon l'une quelconque des revendications de 2 à 4, **caractérisé en ce que** les moyens d'assemblage par encliquetage (30) comprennent un bouton (23) saillant d'une des parties (19, 20) et destiné à s'introduire de façon stable dans une cavité (24) réalisée dans l'autre partie (19, 20).

6. Le soufflet de passerelle selon l'une quelconque des revendications de 2 à 5, **caractérisé en ce que** les moyens d'assemblage par encliquetage (30) comprennent une dent (25) réalisée sur une des parties (19, 20) et destinée à venir en prise de façon stable avec un cran (26) réalisé sur l'autre partie (19, 20).

7. Le soufflet de passerelle selon l'une quelconque des revendications de 1 à 6, **caractérisé en ce que** lesdits profilés (12, 13) en forme de barres ont, au niveau de la zone d'assemblage de l'élément d'accouplement (18), des axes (A1, A2) respectifs qui sont essentiellement parallèles à une première direction (D1) prédéfinie, l'élément d'accouplement comprenant des moyens (29) destinés à confiner les profilés (12, 13) le long d'une deuxième direction (D2) transversale à la première direction (D1) prédéfinie.

8. Le soufflet de passerelle selon la revendication 7, **caractérisé en ce que** les moyens de confinement (29) comprennent un premier et un deuxième bords longitudinaux (27, 28) réalisés au niveau d'extrémités transversales d'au moins une des deux parties (19, 20) de l'élément d'accouplement (18).

9. Le soufflet de passerelle selon l'une quelconque des revendications de 1 à 8, **caractérisé en ce que** l'élément d'accouplement est réalisé en matière plastique.

10. Le soufflet de passerelle selon l'une quelconque des revendications de 1 à 9, **caractérisé en ce que** l'élément d'accouplement est réalisé dans un matériau comprenant au moins un certain pourcentage de polytétrafluoroéthylène.
